# EUROPEAN PATENT APPLICATION

(11) **EP 4 852 084 A1**
(43) Date of publication of application: **09.12.2026**
(21) Application number: 25910983.3
(22) Date of filing: 18.12.2025
(51) Int. Cl.: H01M 4/36

(54) **POSITIVE ELECTRODE MATERIAL AND BATTERY**

(30) Priority: 26.12.2024 CN 202411976302
(71) Applicant: BTR (Jiangsu) New Material Technology Co., Ltd, Changzhou, Jiangsu 213200 (CN)
(72) Inventor: LIU, Guoxue, hangzhou, Jiangsu 213200 (CN); WAN, Jiping, hangzhou, Jiangsu 213200 (CN); RAO, Xiangxiang, hangzhou, Jiangsu 213200 (CN); ZHENG, Yu, hangzhou, Jiangsu 213200 (CN); SONG, Xiong, hangzhou, Jiangsu 213200 (CN); YANG, Shunyi, hangzhou, Jiangsu 213200 (CN); HUANG, Youyuan, hangzhou, Jiangsu 213200 (CN)
(74) Representative: Hautier IP - MC/EP
(86) International application number: PCT/CN2025/143479
(87) International publication number: WO 2026/138632

(57) **Abstract**

The present application relates to a positive electrode material and a battery. The positive electrode material comprises a plurality of particles; an SEM image of the positive electrode material is obtained by using a scanning electron microscope at a magnification of 3K, 200 particles in the SEM image are randomly measured, the average size of the longest diameters of individual particles is D, the average size of the wide diameters of the particles perpendicular to and bisecting the longest diameters is L, the average aspect ratio of the particles is α=D/L, and 1≤α≤1.6; moreover, the proportion of particles having a particle size less than 1 µm in the positive electrode material is R%, and 10 ≤R ≤16. The positive electrode material in the present application has both high capacity and high energy density, and excellent long-cycle stability, particularly high-temperature cycle stability.

## Description

### CROSS-REFERENCE TO RELATED APPLICATIONS

This application claims priority to Chinese Patent Application No. 202411976302.2, entitled "Cathode material and Battery," filed on Dec. 26, 2024.

### TECHNICAL FIELD

The present disclosure relates to the technical field of cathode materials, in particular to a cathode material and a battery.

### BACKGROUND

Lithium-ion batteries (LIBs) have the advantages such as high energy density, high power density, long cycle life, and low self-discharge, and thus are widely used in the fields such as 3C electronic products, electric vehicles, and energy storage. The cathode material, as a core component of lithium-ion batteries, directly determines the working voltage and storage capacity of the battery.

At present, cathode materials have high activity in battery reactions and are prone to reacting with electrolyte, leading to defects such as gas generation, reduced cycle life, and decreased high-temperature storage performance of the materials. Therefore, how to make cathode materials possess excellent capacity and energy density, and improve the long-term cycling stability of cathode materials is still an urgent problem to be solved at present.

### SUMMARY

The present disclosure provides a cathode material and a battery. The cathode material according to the present disclosure has high capacity and energy density and excellent long-term cycling stability, particularly high-temperature cycling stability.

In a first aspect, the present disclosure provides a cathode material including a plurality of particles; the SEM images of the cathode material are obtained using a scanning electron microscope at a magnification of 3000 x; within the SEM images, 200 particles are randomly measured; the average size of the longest diameter of a single particle is denoted as D, and the average size of the width diameter (short diameter) that perpendicularly bisects the longest diameter of the particle is denoted as L; the average aspect ratio of the particles is α = D/L, where 1 ≤ α ≤ 1.6; and in the electron micrograph of the cathode material, the proportion of particles with a particle size less than 1 µm in the cathode material accounts for R%, where 10 ≤ R ≤ 16.

In a second aspect, the present disclosure provides a cathode sheet, where the cathode sheet includes the cathode material according to the first aspect.

In a third aspect, the present disclosure provides a battery, where the battery includes the cathode material according to the first aspect or the cathode sheet according to the second aspect.

Compared with the related art, the technical solution of the present disclosure has at least the following beneficial effects:

The cathode material of the present disclosure has an average aspect ratio of particles in the range of 1≤α≤1.6, indicating that the diameters of the particles vary only slightly in different directions, and when the particles are subjected to stress, the anisotropy of stress within the particles is relatively small, which facilitates uniform dispersion of particle expansion stress, reduces local stress accumulation, and enhances the structural stability and cycle capacity retention of the cathode material; but when the average aspect ratio falls within the above range, the variation in particle diameters across different directions becomes smaller, leading to a narrowed volume particle size distribution of the cathode material, which in turn results in a decrease in compaction density and capacity of the cathode material. Therefore, in the present disclosure, while controlling the average aspect ratio of the cathode material particles, the proportion of particles with a particle size less than 1 µm is controlled to be R%, where 10 ≤ R ≤ 16; the particles with a particle size less than 1 µm can effectively fill the gaps between particles larger than 1 µm, thereby ensuring the compaction density and capacity of the cathode material while controlling the particle aspect ratio; the average aspect ratio of the cathode material satisfying 1 ≤ α ≤ 1.6 can reduce particle rupture of the cathode material and improve its structural stability and long-term cycling performance. Under the synergistic effect of the both factors, the cathode material has high capacity and energy density, and excellent long-term cycling stability, particularly high-temperature cycling stability.

### BRIEF DESCRIPTION OF DRAWINGS

The following further describes the present disclosure with reference to the accompanying drawings and embodiments.
FIG. 1 is a schematic diagram of a discharging state of a battery according to an embodiment of the present disclosure.
FIG. 2 is an SEM morphology image of the cathode material according to Embodiment 1 of the present disclosure.
FIG. 3 is an SEM morphology image of the cathode material according to Comparative Embodiment 1 of the present disclosure.
FIG. 4 is a comparison diagram of cycle performance of the cathode material according to Embodiment 1, Comparative Embodiment 1 and Comparative Embodiment 2 of the present disclosure.

### DESCRIPTION OF EMBODIMENTS

In order to better understand the technical solutions of the present disclosure, embodiments of the present disclosure are described in detail below with reference to the accompanying drawings.

It is to be made clear that the described embodiments are only some rather than all of the embodiments of the present disclosure. All other embodiments obtained by those of ordinary skill in the art based on the embodiments in the present disclosure without creative efforts fall within the protection scope of the present disclosure.

The terms used in embodiments of the present disclosure are only for the purpose of describing specific embodiments, rather than limiting the present disclosure. As used in embodiments of the present disclosure and the appended claims, the singular forms "a/an", "said", and "the" are intended to include the plural forms as well, unless the context clearly indicated otherwise.

It should be understood that the term "and/or" used herein is merely an association relationship describing an associated object, and indicates that there may be three relationships. For example, A and/or B may indicate: only A, both A and B, and only B. In addition, the character "/" herein generally indicates that the related objects before and after the character present an "or" relationship.

In a first aspect, the present disclosure provides a cathode material, including a plurality of particles; the SEM images of the cathode material are obtained using a scanning electron microscope at a magnification of 3K; within the SEM images, 200 particles are randomly measured; the average size of the longest diameter of a single particle is denoted as D, and the average size of the width diameter that perpendicularly bisects the longest diameter of the particle is denoted as L; the average aspect ratio of the particles is α = D/L, where 1 ≤ α ≤ 1.6; and in the electron micrograph of the cathode material, the proportion of particles with a particle size less than 1 µm in the cathode material accounts for R%, where 10 ≤ R ≤ 16.

The cathode material of the present disclosure has an average aspect ratio of particles in the range of 1≤α≤1.6 indicating that the diameters of the particles vary only slightly in different directions, and when the particles are subjected to stress, the anisotropy of stress within the particles is relatively small, which facilitates uniform dispersion of particle expansion stress, reduces local stress accumulation, and enhances the structural stability and cycle capacity retention of the cathode material; but when the average aspect ratio falls within the above range, the variation in particle diameters across different directions becomes smaller, leading to a narrowed particle size distribution of the cathode material, which in turn results in a decrease in compaction density and capacity of the cathode material. In the present disclosure, while controlling the average aspect ratio of the cathode material particles, the proportion of particles with a particle size less than 1 µm is controlled to be R%, where 10 ≤ R ≤ 16; the particles with a particle size less than 1 µm can effectively fill the gaps between particles larger than 1 µm, thereby ensuring the compaction density and capacity of the cathode material while controlling the particle aspect ratio; the average aspect ratio of the cathode material satisfying 1 ≤ α ≤ 1.6 can reduce particle rupture of the cathode material under high compaction condition and improve its structural stability and long-term cycling performance. Under the synergistic effect of the both factors, the cathode material has high capacity and energy density, and excellent long-term cycling stability, particularly high-temperature cycling stability.

It should be noted that, when the average aspect ratio of the cathode material particles exceeds 1.6, it indicates that the diameters of the particles vary significantly in different directions. During the rolling process in which the cathode material is processed into an electrode sheet, the particles are prone to stressing effects due to mutual compression, and the anisotropy of the stress is large. This leads to the formation of cracks on the particles, resulting in an increase in the specific surface area of the cathode material, an increase in the number of active sites, and an increase in side reactions with the electrolyte.

In some embodiments, the cathode material has a general formula of LixNiₐCo_{b}N_{c}M_{d}O₂, where 0.98 ≤ x ≤ 1.1, 0.50 ≤ a ≤ 0.98, 0 < b ≤ 0.40, 0 < c ≤ 0.4, 0 ≤ d ≤ 0.10, N is Mn or Al, and M is a metal element.

The value of x may be specifically 0.98, 0.99, 1.0, 1.02, 1.04, 1.05, 1.07, 1.08, 1.09 or 1.1, the value of a may be specifically 0.5, 0.6, 0.7, 0.8, 0.82, 0.84, 0.85, 0.88, 0.89, 0.90, 0.92, 0.95 or 0.98, the value of b may be 0.001, 0.01, 0.05, 0.1, 0.15, 0.16, 0.2, 0.25, 0.3, 0.35 or 0.4, the value of c may be 0.001, 0.01, 0.05, 0.1, 0.15, 0.16, 0.2, 0.25, 0.3, 0.35 or 0.4, and the value of d may be 0, 0.001, 0.005, 0.006, 0.008, 0.009, 0.01, 0.02, 0.03, 0.05, 0.07 or 0.1, which are not limited herein.

In some embodiments, the M element includes at least one of Ti, Zr, Mg, Sr, Ba, Ca, Nb, W, Sb, Ta, Sn, and Y. It can be understood that an appropriate amount of element M doping can improve the lattice structure stability of the cathode material and reduce lithium-nickel mixing.

In some embodiments, the average aspect ratio of the particles satisfies 1 ≤ α ≤ 1.6, and may specifically be 1, 1.1, 1.15, 1.2, 1.25, 1.3, 1.35, 1.4, 1.45, 1.5, 1.55, 1.6, or other values within the above range, which are not limited herein. Optionally, 1.08 ≤ α ≤ 1.37. Optionally, 1.1 ≤ α ≤ 1.4. Optionally, 1.2 ≤ α ≤ 1.6. When the average aspect ratio of the particles falls within the above range, the variation in particle diameters across different directions is small, and when the particles are subjected to stress, the anisotropy of stress within the particles is relatively small, which facilitates uniform dispersion of particle expansion stress, reduces local stress accumulation, and enhances the structural stability and cycle capacity retention of the cathode material.

It should be noted that the average aspect ratio of the particles refers to a result obtained by randomly measuring the aspect ratios of 200 particles that appear completely within the field of view of the electron microscope photograph and then averaging those values. A particle that appears completely within the field of view of the electron microscope photograph means that the entire contour of the particle is completely displayed in the electron microscope photograph, and the contour is neither covered by other particles in the field of view nor intersected by the boundaries of the electron microscope photograph. The longest diameter refers to that the diametrical line whose endpoints lie on the contour of the particle within the circumscribed circle of the particle. The width diameter refers to the diameter that is perpendicular to the midpoint of the longest diameter and whose endpoints lie on the contour of the particle.

In some embodiments, 1 µm < D < 5 µm, and 1 µm < L < 5 µm. The value of D may be specifically 1.1 µm, 1.5 µm, 2.0 µm, 2.5 µm, 3.0 µm, 3.5 µm, 4.0 µm, 4.9 µm, or other values within the above range, which are not limited herein. The value of L may be specifically 1.1 µm, 1.5 µm, 2.0 µm, 2.5 µm, 3.0 µm, 3.5 µm, 4.0 µm, 4.9 µm, or other values within the above range, which are not limited herein.

In some embodiments, the number proportion R% of particles with a particle size less than 1 µm in the cathode material satisfies 10 ≤ R ≤ 16. Specifically, the number proportion R% of particles with a particle size less than 1 µm in the cathode material may be 10, 11, 12, 13, 14, 15, 16, or any range formed by any two of the above values. Optionally, 10 ≤ R ≤ 14. Optionally, 11 ≤ R ≤ 14. Therefore, particles smaller than 1 µm can effectively fill the gaps between particles larger than 1 µm, ensuring the compaction density and capacity of the cathode material while controlling the particle aspect ratio.

In some embodiments, in the cathode material, the proportion of particles whose aspect ratio satisfies 1 ≤ α ≤ 1.6 relative to the total number of particles is P%, with P ≥ 90, and specifically may be 90%, 91%, 92%, 93%, 94%, 95%, 96%, 97%, 98%, 99%, or other values within the above range, which are not limited herein. It can be understood that the higher the proportion of particles whose aspect ratio satisfies 1 ≤ α ≤ 1.6, the lower the proportion of elongated particles in the cathode material. This facilitates uniform dispersion of particle expansion stress and allows the lithium-ion deintercalation rate to remain isotropic, thereby improving the rate capability and cycle capacity retention of the cathode material. It should be noted that particles with a particle size less than 1 µm can also satisfy 1 ≤ α ≤ 1.6, and these small and round particles can be filled between particles with a large particle size, which can improve the compaction density of the cathode material and further improve the energy density of the battery.

In some embodiments, the volume median particle size D₅₀ of the cathode material is 2.0 µm to 6.0 µm, which may specifically be 2.0 µm, 3.0 µm, 3.5 µm, 4.0 µm, 4.5 µm, 5.0 µm, 5.5 µm, 6.0 µm, or other values within the above range, which are not limited herein. Since the volume median particle size of the cathode material is within the above range, the particles within this size range have better electrochemical performance, higher discharge capacity and excellent rate capability.

In some embodiments, the volume particle size distribution width of the cathode material satisfies: 1.0 < (D₉₀ - D₁₀ )/D₅₀ ≤ 2, which may be specifically 1.05, 1.08, 1.1, 1.15, 1.18, 1.2, 1.22, 1.25, 1.26, 1.3, 1.35, 1.4, 1.5, 1.6, 1.7, 1.8, 1.9, 2, or other values within the above range, which are not limited herein. In the present disclosure, by controlling the particle size distribution width of the cathode material within the above range, particles of different sizes can achieve closer packing, thereby increasing the compaction density of the cathode sheet and resulting in higher energy density.

In some embodiments, the cathode material is a single-crystal material, the particles include primary particles, and the primary particles have a particle size of 1 µm to 5 µm.

It should be noted that "grains with the same orientation" known to those skilled in the art are not strictly speaking "single-crystals." In crystallography, an ideal single-crystal means a crystal that possesses completely identical arrangement and orientation. However, limited by impurities, strains and crystal defects, ideal single-crystals are very rare and difficult to produce in reality. Therefore, the materials known in the art as having a single-crystal structure are actually more of a "quasi-single-crystal morphology" cathode material, which only exhibits a large particle size similar to single-crystals in terms of size, distinguishing it from polycrystalline particles composed of numerous small particles.

The particles with the same orientation in the present disclosure may be a single particle composed of one primary particle. The aforementioned single-crystal cathode material may also contain a small number of "quasi-secondary particles" formed by the adhesion of several primary particles. "Primary particle" refers to a minimum particle unit recognized when the cathode active material is observed by a scanning electron microscope.

It should be noted that the difference between the single-crystal cathode material and the polycrystalline cathode material (i.e., the polycrystalline secondary particles) lies in that the smallest particles of the polycrystalline secondary particles are secondary particles formed by agglomeration of nanoscale primary particles. However, for the single-crystal cathode material, the smallest particles are usually micron-sized monomer primary particles. Generally speaking, in addition to the EBSD test means, it can also be determined whether the obtained cathode product is a single-crystal material by characterization means such as scanning electron microscopy (SEM). For example, for a single-crystal cathode material, the morphology of the single-crystal particles can be characterized by SEM, and it can be seen that the shape of the single-crystal particles generally appears as regular or irregular spheres, and no significant particle agglomeration exists. The orientation of the single-crystal cathode material can also be characterized by EBSD, and it can be observed by EBSD that the colors in the at least one primary particles are the same to determine that the primary particles having the same orientation, and primary particles with the same orientation are considered single-crystals. It should be noted that "single-crystal cathode materials" known to those skilled in the art are not "single-crystals" in the strict crystallographic sense. In crystallography, an ideal single-crystal means a crystal that possesses completely identical arrangement and orientation. However, limited by impurities, strains and crystal defects, ideal single-crystals are very rare and difficult to produce in laboratories. Therefore, the single-crystal cathode materials known in the art are actually more "quasi-single-crystal morphology" cathode materials, which only exhibit quasi-single-crystal large particle sizes in terms of size, distinguishing them from polycrystals composed of numerous small primary particles.

In some embodiments, the specific surface area of the cathode material is 0.4 m²/g to 0.8 m²/g. Specifically, it may be 0.4 m²/g, 0.45 m²/g, 0.5 m²/g, 0.55 m²/g, 0.6 m²/g, 0.65 m²/g, 0.7 m²/g, 0.75 m²/g, 0.8 m²/g, or other values within the above range, which are not limited herein. Thanks to the improved roundness of the particles in the cathode material, the specific surface area of the cathode material can be controlled within the above range, which effectively reduces side reactions between the cathode material and the electrolyte and improves the capacity of the cathode material.

In some embodiments, the tap density of the cathode material is ρ1 g/cm³, where 1.5 ≤ ρ1 < 2.2, which may specifically be 1.91 g/cm³, 1.95 g/cm³, 2.0 g/cm³, 2.1 g/cm³, 2.3 g/cm³, 2.4 g/cm³, 2.5 g/cm³, 2.6 g/cm³, 2.69 g/cm³, or other values within the above range, which are not limited herein.

In some embodiments, the compaction density of the cathode material is ρ2 g/cm³, where 3.0 ≤ ρ2 < 3.5, which may specifically be 3.0 g/cm³, 3.1 g/cm³, 3.2 g/cm³, 3.25 g/cm³, 3.3 g/cm³, 3.35 g/cm³, 3.4 g/cm³, 3.45 g/cm³, 3.49 g/cm³, or other values within the above range, which are not limited herein.

In some embodiments, the cathode material satisfies 11 ≤ pH ≤ 12, and may specifically be 11, 11.2, 11.5, 11.7, 11.8, 11.9, or 12, but is not limited to the recited values, and other unrecited values within the numerical range are also applicable. It can be understood that the surface alkaline impurities of the cathode material mainly refer to Li2CO3 and LiOH. When the pH value of the cathode material is within the above range, it can reduce the gas generation during cycling, protect the structural stability of the cathode material, and help improve the cycle stability of the cathode material.

In some embodiments, the capacity retention rate of the button battery made of the cathode material after 50 cycles at 55 °C is ≥ 95%, which may specifically be 95%, 95.5%, 95.8%, 96.2%, 96.5%, 97.0%, 97.5%, 98.0%, but is not limited to the recited values, and other unrecited values within the numerical range are also applicable.

In a second aspect, the present disclosure provides a preparation method of the above cathode material, including the following steps:

Step S100: mixing a precursor, a lithium salt and a dopant to obtain a first mixture, where the dopant comprises at least one of compounds of Al, Ti, Zr, Mg, Sr, Ba, Ca, Nb, W, Sb, Ta, Sn and Y.

In some embodiments, the precursor has a chemical formula of NiₓCo_{y}N_{z}O₂, where 0.6 ≤ x ≤ 0.98, 0 < y ≤ 0.4, 0 < z ≤ 1 - x - y, and the N element is Mn or Al.

In some embodiments, the precursor has a chemical formula of NiₓCo_{y}N_{z}(OH)₂, where 0.6 ≤ x ≤ 0.98, 0 < y ≤ 0.4, 0 < z ≤ 1 - x - y, and the N element is Mn or Al.

In some embodiments, the median particle size of the precursor is 2.0 µm to 4.0 µm, which may specifically be 2.0 µm, 2.3 µm, 2.5 µm, 3.0 µm, 3.5 µm, 3.8 µm, 3.9 µm or 4.0 µm, but is not limited to the recited values, and other unrecited values within the numerical range are also applicable.

In some embodiments, the dopant may be an oxide, a salt, etc. of the above elements, which are not limited herein.

In some embodiments, based on the mass of the nickel-cobalt-manganese-based oxide precursor as 100%, the addition amount of the dopant is 0.05% to 0.5%, which may specifically be 0.05%, 0.06%, 0.07%, 0.08%, 0.1%, 0.12%, 0.15%, 0.2%, 0.25%, 0.28%, 0.3%, 0.4% or 0.5%, but is not limited to the recited values, and other unrecited values within the numerical range are also applicable. Controlling the amount of the dopant added within the above range in the present disclosure is beneficial for controlling the size and arrangement of the primary particles of the cathode material, thereby improving the capacity and particle structural stability of the cathode material.

In some embodiments, the lithium source includes at least one of lithium carbonate, lithium hydroxide, lithium acetate, lithium chloride, lithium nitrate, and lithium oxalate.

In some embodiments, the molar ratio of Li in the first mixture to the total molar amount of transition metals in the precursor is controlled to satisfy 0.98 ≤ n_{Li}/n_{Me} ≤ 1.1, which may specifically be 0.98:1, 1.01:1, 1.02:1, 1.03:1, 1.04:1, 1.05:1, 1.06:1, 1.08:1, 1.1:1, or other values within the above range, which are not limited herein.

In some embodiments, the mixing is performed in a mixing device, which may be a high-speed mixer, a ball mill mixer, a VC mixer, or a three-dimensional mixer, etc., and may be selected according to actual needs, which is not limited herein.

In some embodiments, the mixing includes low-speed mixing, medium-speed mixing and high-speed mixing. By gradually increasing the mixing speed, it can be ensured that the components are uniformly mixed, which is beneficial to improving the distribution uniformity of the nickel-cobalt-manganese-based oxide precursor, the lithium source and the dopant, reducing structural defects in the cathode material, and improving the structural ordering of the cathode material.

Step S200: subjecting the first mixture to a pre-oxidation sintering treatment under an oxygen-containing atmosphere to obtain a pre-oxidized composite.

In some embodiments, the first mixture is pressed into a compacted material and then holes are punched, with the spacing between the holes controlled to be less than 1 cm.

In some embodiments, the temperature of the pre-oxidation sintering treatment is 500 °C to 900 °C, which may specifically be 500 °C, 550 °C, 570 °C, 600 °C, 650 °C, 700 °C, 750 °C, 800 °C, 850 °C, 900 °C, or other values within the above range, which are not limited herein.

In some embodiments, the ambient pressure during the pre-oxidation sintering treatment is 20 Pa to 60 Pa, which may specifically be 20 Pa, 25 Pa, 30 Pa, 35 Pa, 40 Pa, 45 Pa, 50 Pa, 55 Pa, 60 Pa, or other values within the above range, which are not limited herein.

In some embodiments, the time of the pre-oxidation sintering treatment is 2 h to 8 h, which may specifically be 2 h, 3 h, 4 h, 5 h, 6 h, 7 h, 8 h, or other values within the above range, which are not limited herein.

In the present disclosure, the first mixture is first subjected to a pre-oxidation sintering treatment. By controlling the pressure, temperature, and time, the lithium salt can act as a flux to enable more uniform mixing of the components. The intercalation of lithium ions from the lithium salt into the precursor improves the roundness of the precursor particles. At the above-mentioned temperature, most of the lithium salt can be intercalated into the precursor, thereby reducing residual lithium salt and minimizing the generation of fine powder, resulting in a pre-oxidized composite.

Step S300: mixing the pre-oxidized composite and the oxygen supplement to obtain a second mixture, and performing a one-pulse sintering on the second mixture in an oxygen-containing atmosphere to obtain a matrix material. The one-pulse sintering includes sequentially a first stage, a second stage, repeatedly performed first and second stages, and a fifth stage. The sintering temperature T₁ of the first stage is 800 °C to 1000 °C, the sintering temperature T₂ of the second stage is T₁ - 30 °C, and the sintering temperature T₅ of the fifth stage is T₂ - 10 °C. The total holding time at the temperature T₁ is controlled to be 4 h to 8 h.

In some embodiments, the oxygen supplement includes at least one of lithium peroxide, sodium peroxide, sodium perborate, and potassium permanganate. It can be understood that the oxygen supplement can decompose at a high temperature to generate oxygen. Since the oxygen supplement is fully mixed with the pre-oxidized composite, the oxygen supplement can be filled between the pre-oxidized composite particles, and provide additional oxygen in the subsequent one-pulse sintering process, which is beneficial to the full oxidation of each component.

In some embodiments, based on the mass of the pre-oxidized complex as 100%, the addition amount of the oxygen supplement is 0.5% to 1%, which may be 0.5%, 0.6%, 0.7%, 0.8%, 0.9% or 1%, but is not limited to the recited values, and other unrecited values within the numerical range are also applicable.

It can be understood that the pre-oxidized composite particles are relatively compact, making it difficult for oxygen to penetrate during the one-pulse sintering process. Therefore, an oxygen supplement is added, which decomposes at high temperature to generate oxygen with few byproducts. This oxygen can be supplied from within the second mixture to provide the additional oxygen required for the pre-oxidized composite to undergo further complete oxidation, thereby making the one-pulse sintering more thorough and improving the structural stability of the matrix material.

In some embodiments, the oxygen concentration in the oxygen-containing atmosphere ≥ 90%.

In some embodiments, the heating rate of the one-pulse sintering is 0.5 °C/min to 2.5 °C/min, which may specifically be 0.5 °C/min, 0.75 °C/min, 1 °C/min, 1.25 °C/min, 1.5 °C/min, 2 °C/min, 2.25 °C/min, 2.5 °C/min, or other values within the above range, which are not limited herein.

In some embodiments, during one-pulse sintering process, the ambient pressure is 20 Pa to 60 Pa, which may specifically be 20 Pa, 25 Pa, 30 Pa, 35 Pa, 40 Pa, 45 Pa, 50 Pa, 55 Pa, 60 Pa, or other values within the above range, which are not limited herein.

In some embodiments, during one-pulse sintering process, the sintering temperature T1 of the first stage is 800 °C to 1000 °C, which may specifically be 800 °C, 820 °C, 830 °C, 850 °C, 870 °C, 900 °C, 950 °C, 980 °C, 990 °C, 1000 °C, or other values within the above range, which are not limited herein.

In some embodiments, during one-pulse sintering process, the holding time of the first stage is 1 h to 2 h, which may be specifically 1.0 h, 1.2 h, 1.5 h, 2 h, or other values within the above range, which are not limited herein.

In some embodiments, during one-pulse sintering process, the sintering temperature T2 of the second stage is T1 - 30 °C, which may specifically be 770 °C, 820 °C, 850 °C, 870 °C, 900 °C, 950 °C, 970 °C, or other values within the above range, which are not limited herein.

In some embodiments, during one-pulse sintering process, the holding time of the second stage is 1 h to 2 h, which may specifically be 1.0 h, 1.2 h, 1.5 h, 2 h, or other values within the above range, which are not limited herein.

In some embodiments, during one-pulse sintering process, the total holding time at temperature T1 is controlled to be 4 h to 8 h, which may specifically be 4.0 h, 4.5 h, 5 h, 5.5 h, 6 h, 6.5 h, 7 h, 7.5 h, 8 h, or other values within the above range, which are not limited herein. The total holding time at temperature T2 is controlled to be 4 h to 8 h, which may specifically be 4.0 h, 4.5 h, 5 h, 5.5 h, 6 h, 6.5 h, 7 h, 7.5 h, 8 h, or other values within the above range, which are not limited herein.

In some embodiments, during one-pulse sintering process, the sintering temperature T4 of the fourth stage is T2 - 10 °C, that is, 760 °C to 960 °C, which may specifically be 760 °C, 820 °C, 850 °C, 870 °C, 900 °C, 950 °C, 960 °C, or other values within the above range, which are not limited herein.

In some embodiments, the holding time of the fourth stage is 4 h to 6 h, which may specifically be 4 h, 4.5 h, 5 h, 5.5 h, 5.8 h or 6 h, or other values within the above range, which are not limited herein.

During the one-pulse sintering process, controlling the temperature and time of the fourth stage within the above range promotes the repair of the grain boundary surfaces of the primary particles of the cathode material, thereby improving the particle tolerance and structural ordering of the cathode material.

Step S300: performing micron-sized particle dissociation treatment on the matrix material, mixing the dissociation product with a coating agent, and then performing secondary sintering treatment to obtain a cathode material.

In some embodiments, the dissociation treatment includes at least one of jet milling and grinding.

In some embodiments, during jet milling, the grinding air pressure ranges from 0.3 MPa to 0.8 MPa, which may specifically be 0.3 Mpa, 0.4 Mpa, 0.5 Mpa, 0.55 Mpa, 0.6 Mpa, 0.65 Mpa, 0.7 Mpa, 0.8 Mpa, or other values within the above range, which are not limited herein.

In some embodiments, during jet milling, the classification frequency is 30 Hz to 55 Hz, which may specifically be 30 Hz, 35 Hz, 40 Hz, 45 Hz, 50 Hz, 55 Hz, or other values within the above range, which are not limited herein.

In some embodiments, the average aspect ratio of the matrix material after the dissociation treatment is 1-1.6, and the proportion of particles with a particle size less than 1 µm is identified to be 10% to 16% under electron micrograph at a magnification of 3K.

In some embodiments, based on the mass of the matrix material as 100%, the addition amount of the coating agent is 0.05% to 0.4%, which may specifically be 0.05%, 0.06%, 0.07%, 0.08%, 0.1%, 0.12%, 0.15%, 0.2%, 0.25%, 0.28%, 0.3%, 0.35% or 0.4%, but is not limited to the recited values, and other unrecited values within the numerical range are also applicable.

In some embodiments, the coating agent includes a compound containing element M including at least one of B, Al, Ti, Zr, Mg, Sr, Ba, Ca, Nb, W, Sb, Ta, Sn, and Y.

In some embodiments, the oxygen concentration in the oxygen-containing atmosphere ≥ 95%.

In some embodiments, the temperature of the secondary sintering treatment is 500 °C to 900 °C, which may specifically be 500 °C, 550 °C, 600 °C, 650 °C, 700 °C, 750 °C, 800 °C, 850 °C, 900 °C, or other values within the above range, which are not limited herein.

In some embodiments, the time of the secondary sintering treatment is 6 h to 16 h, which may specifically be 6 h, 7 h, 7.5 h, 8 h, 8.5 h, 9 h, 9.5 h, 10 h, 11 h, 12 h, 13 h, 14 h, 15 h, 16 h, or other values within the above range, which are not limited herein.

In some embodiments, during the secondary sintering process, the ambient pressure is 20 Pa to 60 Pa, which may specifically be 20 Pa, 25 Pa, 30 Pa, 35 Pa, 40 Pa, 45 Pa, 50 Pa, 55 Pa, 60 Pa, or other values within the above range, which are not limited herein.

According to a third aspect, the present disclosure provides a battery, where the battery includes the cathode material according to the first aspect or the cathode material prepared according to the preparation method of the cathode material.

The battery provided by the present disclosure can be a secondary battery (such as a lithium ion battery, a sodium ion battery, etc.), including a shell, an electrode assembly, and an electrolyte. The electrode assembly and electrolyte are both located within the shell. The shell can be a packaging bag obtained by packaging with a packaging film (such as an aluminum-plastic film), for example, the secondary battery is a pouch cell.

In other embodiments, the secondary battery may also be a steel shell battery, an aluminum shell battery, or the like.

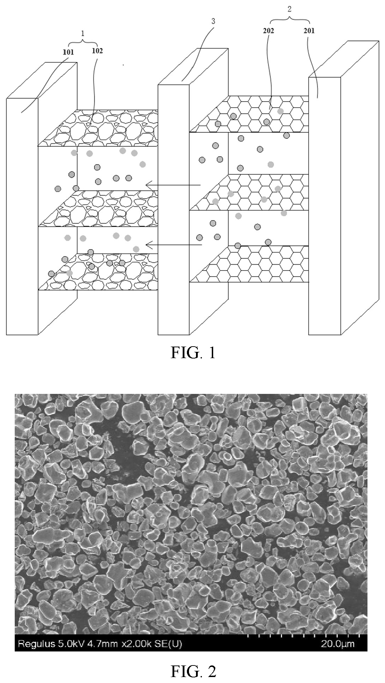

FIG. 1 is a schematic diagram of a discharge state of a battery according to an embodiment of the present disclosure. As shown in FIG. 1, the battery includes a housing and an electrode assembly. The electrode assembly includes a cathode sheet 1, an anode sheet 2, and a separator 3, and the separator 3 is disposed between the cathode sheet 1 and the anode sheet 2. The electrode assembly can be a laminated structure, which is formed by alternately sequentially laminating the cathode sheet 1, the separator 3 and the anode sheet 2.

In other embodiments, the electrode assembly can also be a wound structure, which is formed by sequentially laminating the cathode sheet, the separator and the anode sheet and then winding them.

In some embodiments, the cathode sheet 1 includes a cathode current collector 11 and a cathode active material layer 12 disposed on at least one surface of the cathode current collector 11.

In some embodiments, the cathode current collector 11 can be an aluminum foil or a nickel foil or the like, or can be any composite current collector disclosed in the prior art, such as but not limited to the current collector formed by combining the conductive foil (aluminum foil or nickel foil or the like) and the polymer substrate. The cathode active material layer 12 includes a cathode active material, a conductive agent, and a binder, where the cathode active material is the cathode material according to the first aspect or the cathode material prepared according to the preparation method of the cathode material.

In some embodiments, the anode sheet 2 includes an anode current collector 21 and an anode active material layer 22 disposed on at least one surface of the anode current collector.

In some embodiments, the anode current collector 21 can use at least one of copper foil, nickel foil, stainless steel foil, titanium foil, carbon-based current collector, or the like, and can also be any composite current collector disclosed in the prior art, such as but not limited to the current collector formed by combining the above conductive foil and polymer substrate.

In some embodiments, the anode active material layer 22 includes an anode material including, but not limited to, artificial graphite, natural graphite, soft carbon, hard carbon, a silicon-based material, a tin-based material, lithium titanate, and the like. The silicon-based material may be selected from at least one of elemental silicon, silicon oxides, silicon-carbon composites, silicon-nitrogen composites, and silicon alloys. The tin-based material may be selected from at least one of elemental tin, tin oxides, and tin alloy. However, the present disclosure is not limited to these materials, and other conventional materials that may be used as the anode active material of the battery may also be used. These anode active materials may be used either alone or in combination of two or more.

The battery provided by an embodiment of the present disclosure has the advantages of high capacity, high initial efficiency, long cycle service life, excellent rate performance and low expansion. The battery may be a lithium-ion battery, a sodium-ion battery, or a solid-state electrolyte battery, which is not limited herein.

### Embodiment 1

(1) Weighing 2.5 kg of a precursor having the chemical formula Ni_{0.6}Co_{0.1}Mn_{0.3}(OH)₂, 1.2 kg of LiOH, and based on the mass of the precursor, 0.3% of ZrO₂, 0.1% of Al₂O₃, 0.1% of Sr(OH)₂, respectively, and adding them into a high-speed mixer; after the addition is completed, starting the high-speed mixer and mixing at low speed (300 rpm) for 5 min, medium speed (800 rpm) for 10 min, and high speed (1500 rpm) for 15 min, thereby obtaining a first mixture.
(2) Placing the first mixture in a sintering vessel, pressing it using a pressure of about 1 t to compact the material into a consolidated form; punching holes in the pressed material with a spacing of less than 1 cm; placing the hole-punched material in a furnace under an oxygen atmosphere for pre-oxidation sintering treatment at a pre-oxidation sintering temperature of 600 °C, a furnace pressure of about 50 Pa, and a pre-oxidation sintering time of 5 h, thereby obtaining a pre-oxidized composite.
(3) Mixing the pre-oxidized composite with an oxygen supplement (lithium peroxide, added in an amount of 1% based on the mass of the pre-oxidized composite) under nitrogen protection for 10 min to obtain a second mixture; placing the second mixture in a furnace under an oxygen atmosphere for a one-pulse sintering process with a furnace pressure of 50 Pa; the one-pulse sintering steps include: 960°C for 2 h → 930°C for 2 h → 960°C for 2 h → 930°C for 2 h → 960°C for 2 h → 930°C for 2 h → 960°C for 2 h → 930°C for 2 h → 920°C for 4 h, thereby obtaining a once-sintered product.
(4) Subjecting the once-sintered product to jet milling at an air pressure of 0.65 MPa and a classification frequency of 45 Hz to obtain a matrix material, where the median particle size D₅₀ of the matrix material satisfies: 3.0 µm ≤ D₅₀ ≤ 3.4 µm.
(5) Mixing the matrix material with 0.1% tungsten oxide and 0.1% titanium oxide under a nitrogen atmosphere to obtain a third mixture; placing the third mixture in a furnace under an oxygen atmosphere for a secondary sintering treatment; controlling the secondary sintering temperature at 500 °C, the furnace pressure at about 50 Pa, and the secondary sintering time at 10 h, thereby obtaining the cathode material.

FIG. 2 is an SEM morphology image of the cathode material according to Embodiment 1 of the present disclosure. As shown in FIG. 2, the cathode material prepared in this embodiment has a chemical formula of LiNi_{0.60}Co_{0.1}Mn_{0.3}O₂, where the doping elements are Zr, Al and Sr, and the coating elements are W and Ti. Since the amount of the doped coating elements is difficult to accurately determine, it is not reflected in the chemical formula.

### Embodiment 2

### Different from Embodiment 1:

The formula of the precursor in step (1) is Ni_{0.5}Co_{0.2}Mn_{0.3}(OH)₂.

The cathode material prepared in this embodiment has a chemical formula of LiNi_{0.50}Co_{0.2}Mn_{0.3}O₂, where the doping elements are Zr, Al and Sr, and the coating elements are W and Ti. Since the amount of the doped coating element is difficult to accurately determine, it is not reflected in the chemical formula.

### Embodiment 3

### Different from Embodiment 1:

The formula of the precursor in step (1) is Ni_{0.7}Co_{0.1}Mn_{0.2}(OH)₂.

The cathode material prepared in this embodiment has a chemical formula of LiNi_{0.70}Co_{0.1}Mn_{0.2}O₂, where the doping elements are Zr, Al and Sr, and the coating elements are W and Ti. Since the amount of the doped coating element is difficult to accurately determine, it is not reflected in the chemical formula.

### Embodiment 4

### Different from Embodiment 1:

The formula of the precursor in step (1) is Ni_{0.6}Co_{0.1}Mn_{0.3}O₂, and the lithium salt used is anhydrous LiOH.

(4) Subjecting the once-sintered product to jet milling at an air pressure of 0.70 MPa and a classification frequency of 45 Hz to obtain a matrix material, where the median particle size D₅₀ of the matrix material satisfies: 2.9 µm ≤ D₅₀ ≤ 3.3 µm.

The cathode material prepared in this embodiment has a chemical formula of LiNi_{0.60}Co_{0.1}Mn_{0.3}O₂, where the doping elements are Zr, Al and Sr, and the coating elements are W and Ti. Since the amount of the doped coating element is difficult to accurately determine, it is not reflected in the chemical formula.

### Embodiment 5

### Different from Embodiment 1:

The formula of the precursor in step (1) is Ni_{0.8}Co_{0.1}Mn_{0.1}(OH)₂.

(4) Subjecting the once-sintered product to jet milling at an air pressure of 0.70 MPa and a classification frequency of 45 Hz to obtain a matrix material, where the median particle size D₅₀ of the matrix material satisfies: 2.9 µm ≤ D₅₀ ≤ 3.3 µm.

The cathode material prepared in this embodiment has a chemical formula of LiNi_{0.80}Co_{0.1}Mn_{0.1}O₂, where the doping elements are Zr, Al and Sr, and the coating elements are W and Ti. Since the amount of the doped coating element is difficult to accurately determine, it is not reflected in the chemical formula.

### Embodiment 6

### Different from Embodiment 1:

The formula of the precursor in step (1) is Ni_{0.98}Co_{0.01}Mn_{0.01}(OH)₂.

(4) Subjecting the once-sintered product to jet milling at an air pressure of 0.70 MPa and a classification frequency of 45 Hz to obtain a matrix material, where the median particle size D₅₀ of the matrix material satisfies: 2.9 µm ≤ D₅₀ ≤ 3.3 µm.

The cathode material prepared in this embodiment has a chemical formula of LiNi_{0.98}Co_{0.01}Mn_{0.01}O₂, where the doping elements are Zr, Al and Sr, and the coating elements are W and Ti. Since the amount of the doped coating element is difficult to accurately determine, it is not reflected in the chemical formula.

### Embodiment 7

### Different from Embodiment 1:

(2) Placing the first mixture in a sintering vessel, pressing it using a pressure of about 1 t to compact the material into a consolidated form; punching holes in the pressed material with a spacing of less than 1 cm; placing the hole-punched material in a furnace under an oxygen atmosphere for pre-oxidation sintering treatment at a pre-oxidation sintering temperature of 700 °C, a furnace pressure of about 50 Pa, and a pre-oxidation sintering time of 8 h, thereby obtaining a pre-oxidized composite.

The cathode material prepared in this embodiment has a chemical formula of LiNi_{0.60}Co_{0.1}Mn_{0.3}O₂, where the doping elements are Zr, Al and Sr, and the coating elements are W and Ti. Since the amount of the doped coating element is difficult to accurately determine, it is not reflected in the chemical formula.

### Embodiment 8

### Different from Embodiment 1:

(1) Weighing 2.5 kg of a precursor having the chemical formula Ni_{0.6}Co_{0.1}Mn_{0.3}(OH)₂, 1.2 kg of LiOH, and based on the mass of the precursor, 0.3% of ZrO₂, 0.1% of Al₂O₃, 0.1% of Sr(OH)₂, 0.05% of WO₃,respectively, and adding them into a high-speed mixer; after the addition is completed, starting the high-speed mixer and mixing at low speed (300 rpm) for 5 min, medium speed (800 rpm) for 10 min, and high speed (1500 rpm) for 15 min, thereby obtaining a first mixture.
(2) Placing the first mixture in a sintering vessel, pressing it using a pressure of about 1 t to compact the material into a consolidated form; punching holes in the pressed material with a spacing of less than 1 cm; placing the hole-punched material in a furnace under an oxygen atmosphere for pre-oxidation sintering treatment at a pre-oxidation sintering temperature of 700 °C, a furnace pressure of about 50 Pa, and a pre-oxidation sintering time of 2 h, thereby obtaining a pre-oxidized composite.

The cathode material prepared in this embodiment has a chemical formula of LiNi_{0.6}Co_{0.1}Mn_{0.3}O₂, where the doping elements are Zr, Al, Sr, and W, and the coating elements are W and Ti. Since the amount of the doped coating element is difficult to accurately determine, it is not reflected in the chemical formula.

### Embodiment 9

### Different from Embodiment 1:

In step (1), weighing 2.5 kg of a precursor having the chemical formula Ni_{0.6}Co_{0.1}Al_{0.3}(OH)₂, 1.2 kg of LiOH, and based on the mass of the precursor, 0.3% of ZrO₂, 0.1% of Sr(OH)₂, respectively, and adding them into a high-speed mixer; after the addition is completed, starting the high-speed mixer and mixing at low speed (300 rpm) for 5 min, medium speed (800 rpm) for 10 min, and high speed (1500 rpm) for 15 min, thereby obtaining a first mixture.

The cathode material prepared in this embodiment has a chemical formula of LiNi_{0.60}Co_{0.1}Al_{0.3}O₂, where the doping elements are Zr and Sr. Since the amount of the doped coating element is difficult to accurately determine, it is not reflected in the chemical formula.

### Embodiment 10

Different from Embodiment 1: In step (3), Mixing the pre-oxidized composite with an oxygen supplement (lithium peroxide, added in an amount of 1% based on the mass of the pre-oxidized composite) under nitrogen protection for 10 min to obtain a second mixture; placing the second mixture in a furnace under an oxygen atmosphere for a one-pulse sintering process with a furnace pressure of 50 Pa; the one-pulse sintering steps include: 960 °C for 4 h → 930 °C for 4 h → 960 °C for 4 h → 930 °C for 4 h → 920 °C for 4 h, thereby obtaining a once-sintered product.

The cathode material prepared in this embodiment has a chemical formula of LiNi_{0.60}Co_{0.1}Mn_{0.3}O₂, where the doping elements are Zr, Al and Sr, and the coating elements are W and Ti. Since the amount of the doped coating element is difficult to accurately determine, it is not reflected in the chemical formula.

### Embodiment 11

### Different from Embodiment 1:

(3) Mixing the pre-oxidized composite with an oxygen supplement (lithium peroxide, added in an amount of 1% based on the mass of the pre-oxidized composite) under nitrogen protection for 10 min to obtain a second mixture; placing the second mixture in a furnace under an oxygen atmosphere for a one-pulse sintering process with a furnace pressure of 50 Pa; the one-pulse sintering steps include: 960 °C for 1 h → 930 °C for 1 h → 960 °C for 1 h → 930 °C for 1 h → 960 °C for 1 h → 930 °C for 1 h → 960 °C for 1h → 930 °C for 1 h → 960 °C for 1 h → 930 °C for 1 h → 960 °C for 1 h → 930 °C for 1 h → 960 °C for 1 h → 930 °C for 1 h → 960 °C for 1 h → 930 °C for 1 h → 920 °C for 4 h, thereby obtaining a once-sintered product.

(4) Subjecting the once-sintered product to jet milling at an air pressure of 0.70 MPa and a classification frequency of 50 Hz to obtain a matrix material, where the median particle size D₅₀ of the matrix material satisfy: 3.0 µm ≤ D₅₀ ≤ 3.4 µm.

The cathode material prepared in this embodiment has a chemical formula of LiNi_{0.60}Co_{0.1}Mn_{0.3}O₂, where the doping elements are Zr, Al and Sr, and the coating elements are W and Ti. Since the amount of the doped coating element is difficult to accurately determine, it is not reflected in the chemical formula.

### Embodiment 12

### Different from Embodiment 1:

(3) Mixing the pre-oxidized composite with an oxygen supplement (sodium peroxide, added in an amount of 0.5% based on the mass of the pre-oxidized composite) under nitrogen protection for 10 min to obtain a second mixture; placing the second mixture in a furnace under an oxygen atmosphere for a one-pulse sintering process with a furnace pressure of 50 Pa; the one-pulse sintering steps include: 960 °C for 2 h → 930 °C for 2 h → 960 °C for 2 h → 930 °C for 2 h → 960 °C for 2 h → 930 °C for 2 h → 960 °C for 2 h → 930 °C for 2 h → 920 °C for 4 h, thereby obtaining a once-sintered product.

(4) Subjecting the once-sintered product to jet milling at an air pressure of 0.75 MPa and a classification frequency of 55 Hz to obtain a matrix material, where the median particle size D₅₀ of the matrix material satisfy: 3.0 µm ≤ D₅₀ ≤ 3.4 µm.

The cathode material prepared in this embodiment has a chemical formula of LiNi_{0.60}Co_{0.1}Mn_{0.3}O₂, where the doping elements are Zr, Al and Sr, and the coating elements are W and Ti. Since the amount of the doped coating element is difficult to accurately determine, it is not reflected in the chemical formula.

### Embodiment 13

(1) Weighing 2.5 kg of a precursor having the chemical formula Ni_{0.6}Co_{0.1}Al_{0.3}(OH)₂, 1.2 kg of LiOH, and adding them into a high-speed mixer; after the addition is completed, starting the high-speed mixer and mixing at low speed (300 rpm) for 5 min, medium speed (800 rpm) for 10 min, and high speed (1500 rpm) for 15 min, thereby obtaining a first mixture.
(2) Placing the first mixture in a sintering vessel, pressing it using a pressure of about 1 t to compact the material into a consolidated form; punching holes in the pressed material with a spacing of less than 1 cm; placing the hole-punched material in a furnace under an oxygen atmosphere for pre-oxidation sintering treatment at a pre-oxidation sintering temperature of 600 °C, a furnace pressure of about 50 Pa, and a pre-oxidation sintering time of 5 h, thereby obtaining a pre-oxidized composite.
(3) Mixing the pre-oxidized composite with an oxygen supplement (lithium peroxide, added in an amount of 1% based on the mass of the pre-oxidized composite) under nitrogen protection for 10 min to obtain a second mixture; placing the second mixture in a furnace under an oxygen atmosphere for a one-pulse sintering process with a furnace pressure of 50 Pa; the one-pulse sintering steps include: 950 °C for 2 h → 920 °C for 2 h → 950 °C for 2 h → 920 °C for 2 h → 950 °C for 2 h → 920 °C for 2 h → 950 °C for 2 h → 920 °C for 2 h → 910 °C for 4 h, thereby obtaining a once-sintered product.
(4) Subjecting the once-sintered product to jet milling at an air pressure of 0.65 MPa and a classification frequency of 45 Hz to obtain a cathode material.

The cathode material prepared in this embodiment has a chemical formula of LiNi_{0.60}Co_{0.1}Al_{0.3}O₂.

### Comparative Embodiment 1

### Different from Embodiment 1:

(3) Mixing the pre-oxidized composite with an oxygen supplement (lithium peroxide, added in an amount of 1% based on the mass of the pre-oxidized composite) under nitrogen protection for 10 min to obtain a second mixture; placing the second mixture in a furnace under an oxygen atmosphere for a primary sintering process with a furnace pressure of 50 Pa, where the primary sintering temperature is 970 °C and the primary sintering time is 12 h, thereby obtaining a once-sintered product.

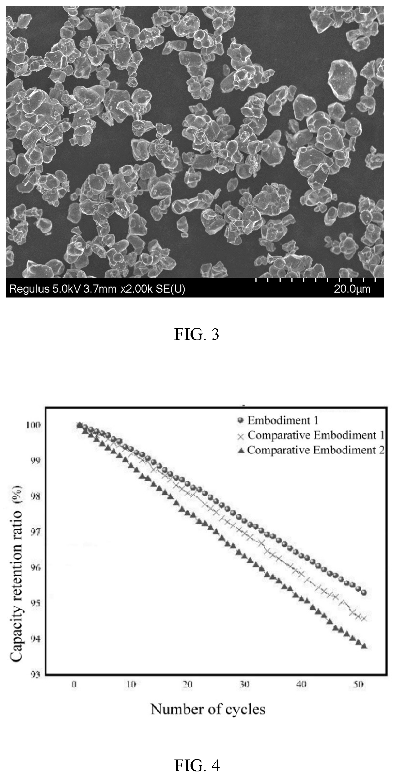

FIG. 3 is an SEM morphology image of the cathode material according to Comparative Embodiment 1 of the present disclosure. As shown in FIG. 3, the cathode material prepared in this embodiment has a chemical formula of LiNi_{0.60}Co_{0.1}Mn_{0.3}O₂, where the doping elements are Zr, Al and Sr, and the coating elements are W and Ti. Since the amount of the doped coating elements is difficult to accurately determine, it is not reflected in the chemical formula.

### Comparative Embodiment 2

### Different from Embodiment 1:

(3) Placing the pre-oxidized composite in a furnace under an oxygen atmosphere for a primary sintering process with a furnace pressure of 50 Pa, where the primary sintering temperature is 950 °C and the primary sintering time is 8 h, thereby obtaining a once-sintered product.

### Comparative Embodiment 3

### Different from Embodiment 1:

(3) Mixing the pre-oxidized composite with an oxygen supplement (lithium peroxide, added in an amount of 1% based on the mass of the pre-oxidized composite) under nitrogen protection for 10 min to obtain a second mixture; placing the second mixture in a furnace under an oxygen atmosphere for a primary sintering process with a furnace pressure of 50 Pa, where the primary sintering temperature is 980 °C and the primary sintering time is 12 h, thereby obtaining a once-sintered product.

(4) Subjecting the once-sintered product to jet milling at an air pressure of 0.8 MPa and a classification frequency of 55 Hz to obtain a matrix material, where the median particle size D₅₀ of the matrix material satisfies: 2.9 µm ≤ D₅₀ ≤ 3.3 µm.

### Comparative Embodiment 4

### Different from Embodiment 13:

(2) Placing the first mixture in a furnace under an oxygen atmosphere for a pre-oxidation sintering treatment at a pre-oxidation sintering temperature of 600 °C, a furnace pressure of about 50 Pa, and a pre-oxidation sintering time of 5 h, thereby obtaining a pre-oxidized composite.

(3) Mixing the pre-oxidized composite with an oxygen supplement (lithium peroxide, added in an amount of 1% based on the mass of the pre-oxidized composite) under nitrogen protection for 10 min to obtain a second mixture; placing the second mixture in a furnace under an oxygen atmosphere for a primary sintering process with a furnace pressure of 50 Pa, where the primary sintering temperature is 950 °C and the primary sintering time is 12 h, thereby obtaining a once-sintered product.

(4) Subjecting the once-sintered product to jet milling at an air pressure of 0.8 MPa and a classification frequency of 55 Hz to obtain a matrix material, where the median particle size D₅₀ of the matrix material satisfies: 2.8 µm ≤ D₅₀ ≤ 3.2 µm.

### Test Methods:

### (1) Particle size distribution test of the cathode material:

Obtaining SEM images of the cathode material using a scanning electron microscope (Hitachi S4800 scanning electron microscope) at a magnification of 3K; using Nano Measure software to measure particle sizes within the SEM images; randomly measuring 200 particles that appear completely within the SEM images; obtaining the average size of the longest diameter of the particles as D, and the average size of the width diameter that perpendicularly bisects the longest diameter as L, thereby calculating the average aspect ratio of the particles as α = D/L. A particle that appears completely within the field of view of the electron microscope photograph means that the entire contour of the particle is completely displayed in the electron microscope photograph, and the contour is neither covered by other particles in the field of view nor intersected by the boundaries of the electron microscope photograph. It should also be noted that the longest diameter refers to that the diametrical line whose endpoints lie on the contour of the particle within the circumscribed circle of the particle. The width diameter refers to the straight line that is perpendicular to the midpoint of the longest diameter and whose endpoints lie on the contour of the particle.

### (2) Determination of the proportion of particles with a particle size less than 1 µm in the cathode material:

Equipment: S4800 Scanning Electron Microscope
1) Using a cotton swab to pick up a small amount of powder sample and applying it evenly and densely onto conductive tape; using a hairdryer to gently blow the powder away in a direction away from other samples; after confirming that the powder is evenly spread on the surface, blowing strongly for more than 10 times until no powder remains piled up;
2) Setting the basic SEM conditions: voltage 5 kV, current 12 mA, magnification 2k times, adjusting contrast and brightness using the auto button, and randomly selecting 10 regions each containing 400 to 1200 particles to capture SEM images;
3) Importing the SEM images obtained in step 2) into Metis Vision software, clicking the "Full Recognition" button on the software interface to obtain the particle size number distribution data and the particle size number distribution graph, thereby determining the number proportion R% of particles with a particle size less than 1 µm in the cathode material.

### (3) Metal elements testing within the cathode material:

Taking 0.3 g of the sample to be tested, dissolving it in aqua regia, cooling and diluting to a constant volume of 100 mL to prepare a stock solution; taking 1 mL of the stock solution and diluting it 100 times to obtain a diluted solution, where the diluted solution is used to test the contents of the main elements Li, Ni, Co, and Mn, and the stock solution is used to test the contents of other elements such as doping elements, with all measurements performed using an Agilent 5110 ICP-OES detection instrument.

### (4) 24-hour gas generation test:

Using the cathode material, a binder, a conductive agent, and carbon nanotubes in a mass ratio of 96:2:1.5:0.5 to prepare a cathode sheet; using graphite, a conductive agent, and a binder in a mass ratio of 95.4:1.2:3.4 to prepare an anode sheet; using a Cellgard separator; using an electrolyte that is an equal-volume mixture of ethylene carbonate (EC), propylene carbonate (PC), and diethyl carbonate (DEC) containing 1 mol/L LiPF₆ as the electrolyte salt; assembling the above components into a 2Ah pouch cell; and then measuring the 24-hour gas generation using the water displacement method.

### (5) Particle size test:

Using a laser particle size analyzer (Malvern Mastersizer 3000) to obtain the particle size distribution of the cathode material based on the light intensity distribution of laser diffraction, with the volume-based cumulative particle size distribution measured by laser diffraction, where D₁₀ represents the particle size corresponding to 10% of the cumulative particle size distribution, D₅₀ represents the particle size corresponding to 50% of the cumulative particle size distribution, and D₉₀ represents the particle size corresponding to 90% of the cumulative particle size distribution;

The volume particle size distribution width of the cathode material is calculated as (D₉₀ - D₁₀)/D₅₀.

Specifically, taking an appropriate amount of sample, pouring it into pure water, uniformly dispersing it by ultrasonication, then adding an appropriate amount of sodium hexametaphosphate (powder:surfactant = 1 g:1 drop) dropwise, stirring to uniformity, pouring the mixture into the sample cell of the measuring instrument, waiting for 10 seconds, and then starting the sample test.

### (6) Specific surface area test:

Using a TriStar II surface area and porosity analyzer (Micromeritics, USA) to measure the specific surface area of the material by nitrogen adsorption and calculating the specific surface area using the BET method.

Specifically: sample preparation: weighing the mass m1 of an empty sample tube, taking 3 g of the sample, degassing it under vacuum at 300 °C for 1 hour, and after cooling, weighing the mass m2 of the sample tube with the sample, with the sample mass m = m2 - m1.

Sample test: placing the sample tube in liquid nitrogen and measuring the nitrogen adsorption amount V at six relative pressures P/P0 to obtain the adsorption isotherm, where the P/P0 is set as 0.05/0.1/0.15/0.20/0.25/0.30.

Fitting the isotherm and calculating the monolayer saturated adsorption amount Vm from the slope and intercept, and then calculating the specific surface area of the cathode material based on Vm.

### (7) Morphology test:

Using a Hitachi S4800 scanning electron microscope to observe the surface morphology and particle size of the sample, thereby obtaining SEM images of the cathode material; using Nano Measurer software to measure the average particle size of the cathode material. The specific method is as follows: analyzing the morphology of the single-crystal material using a scanning electron microscope, using Nano Measurer software to randomly measure particles in the SEM images at a magnification of 3000 times, taking the diameter of the circumscribed circle of a particle as the particle size, measuring at least 200 particles, and calculating the average value.

### (8) Tap density test of cathode materials:

Test of tap density ρ1: Using a Dandong Bettersize BT-303 instrument to test the tap density, with a vibration frequency of 3000 times/min, a vibration time of 1 min, and a vibration amplitude of 3 mm ± 0.1 mm.

### (9) Compaction density test of cathode materials:

Using a compaction density tester (CARVER 4350.22, McCanne, USA) to test the powder compaction density ρ2, weighing 1 g of sample, placing it into a mold, pressing it under a pressure of 6 T for 30 s, then measuring the height after pressing and calculating the compaction density.

### (10) Electrochemical performance evaluated using a button half-cell:

Mixing the cathode material, conductive agent (SP), and binder (5% PVDF solution) in a mass ratio of 93:5:2 to prepare a homogeneous slurry, then uniformly coating the slurry onto a 16 µm thick aluminum foil, and drying it in an oven at 100 °C for 12 h. Using a lithium metal disk with a diameter of 16 mm and a thickness of 1 mm as the anode, using a polyethylene porous membrane with a thickness of 20 µm as the separator, and using an equal-volume mixture of ethylene carbonate (EC) and diethyl carbonate (DEC) containing 1 mol/L LiPF₆ as the electrolyte salt. Assembling the cathode sheet, separator, anode sheet, and electrolyte into a 2016-type coin cell inside an argon-filled glove box where both the water content and oxygen content are less than 5 ppm.

Capacity testing system: using a LAND testing system to test the electrochemical performance (charge-discharge voltage of 3.0 V to 4.4 V at 25 °C), charging at 0.1C, discharging at 0.1C, with a constant-voltage cutoff current of 0.005C, and calculating the discharge specific capacity C (mAh/g) and initial capacity from the discharge capacity.

Cycle testing system: cycling the battery at a rate of 1C for 50 cycles under conditions of 55 °C and a charge-discharge voltage range of 3.0 V to 4.4 V, where the ratio of the final capacity after 50 cycles to the initial capacity is the 50-cycle capacity retention rate, which represents the high-temperature cycling performance. It should be noted that the cutoff current for the capacity test is consistent with the constant-voltage cutoff current in the above capacity testing system.

The cathode materials of the above embodiments (abbreviated as S1 to S13) and comparative embodiments (abbreviated as D1 to D3) were subjected to physicochemical performance tests and electrochemical tests. The test results are shown in Tables 1 and 2 below.

**Table 1: Physical and Chemical Performance Parameters Cathode materials**

| Sample | Chemical Formula | D (µm) | L (µm) | α | R (%) | β (%) | (D₉₀- D₁₀)/ D₅₀ | D₅₀ (µm) | Specific Surface Area (m²/g) | Tap Density (g/cm³) | Compaction Density (g/cm³ ) | pH |
|---|---|---|---|---|---|---|---|---|---|---|---|---|
| S1 | LiNi_{0.6}Co_{0.1}Mn_{0.3}O₂ | 2.2 | 1.83 | 1.20 | 13 | 93 | 1.2 | 3.3 | 0.65 | 2.0 | 3.12 | 11.2 |
| S2 | LiNi_{0.5}Co_{0.2}Mn_{0.3}O₂ | 2.4 | 2.00 | 1.20 | 15 | 95 | 1.3 | 3.2 | 0.62 | 2.0 | 3.05 | 11.1 |
| S3 | LiNi_{0.7}Co_{0.1}Mn_{0.2}O₂ | 2.1 | 1.50 | 1.40 | 13 | 92 | 1.3 | 3.5 | 0.71 | 1.9 | 2.98 | 11.5 |
| S4 | Li_{1.1}Ni_{0.6}Co_{0.1}Mn_{0.3}O₂ | 2.2 | 1.80 | 1.22 | 13 | 92 | 1.5 | 3.1 | 0.75 | 2.0 | 3.14 | 11.4 |
| S5 | LiNi_{0.8}Co_{0.1}Mn_{0.1}O₂ | 2.1 | 1.91 | 1.1 | 12 | 91 | 1.5 | 3.1 | 0.76 | 2.1 | 2.79 | 11.6 |
| S6 | LiNi_{0.98}Co_{0.01}Mn_{0.01}O₂ | 2.1 | 1.75 | 1.20 | 12 | 90 | 1.6 | 3.2 | 0.79 | 2.2 | 2.65 | 11.8 |
| S7 | LiNi_{0.6}Co_{0.1}Mn_{0.3}O₂ | 2.2 | 2.10 | 1.05 | 11 | 91 | 1.2 | 3.8 | 0.68 | 2.1 | 3.14 | 11.2 |
| S8 | LiNi_{0.6}Co_{0.1}Mn_{0.3}O₂ | 2.2 | 1.38 | 1.6 | 15 | 91 | 1.2 | 3.5 | 0.72 | 2.0 | 3.15 | 11.3 |
| S9 | LiNi_{0.6}Co_{0.1}Al_{0.3}O₂ | 2.2 | 1.83 | 1.2 | 13 | 92 | 1.2 | 3.1 | 0.80 | 2.1 | 3.12 | 11.2 |
| S10 | LiNi_{0.6}Co_{0.1}Mn_{0.3}O₂ | 2.4 | 1.92 | 1.24 | 12 | 90 | 1.2 | 3.4 | 0.67 | 2.0 | 3.13 | 11.4 |
| S11 | LiNi_{0.6}Co_{0.1}Mn_{0.3}O₂ | 2.2 | 2.03 | 1.08 | 10 | 94 | 1.3 | 3.0 | 0.75 | 2.1 | 3.14 | 11.2 |
| S12 | LiNi_{0.6}Co_{0.1}Mn_{0.3}O₂ | 2.3 | 1.67 | 1.37 | 14 | 85 | 1.4 | 3.2 | 0.76 | 2.2 | 3.13 | 11.7 |
| S13 | LiNi_{0.6}Co_{0.1}Al_{0.3}O₂ | 2.1 | 1.83 | 1.14 | 13 | 92 | 1.2 | 3.1 | 0.61 | 1.7 | 3.11 | 11.2 |
| D1 | LiNi_{0.6}Co_{0.1}Mn_{0.3}O₂ | 2.5 | 1.47 | 1.7 | 9 | 23 | 1.5 | 3.2 | 0.68 | 2.0 | 3.16 | 11.5 |
| D2 | LiNi_{0.6}Co_{0.1}Mn_{0.3}O₂ | 1.9 | 1.36 | 1.4 | 18 | 15 | 1.4 | 3.2 | 0.95 | 1.9 | 3.12 | 11.8 |
| D3 | LiNi_{0.6}Co_{0.1}Mn_{0.3}O₂ | 2.7 | 1.50 | 1.8 | 17 | 8 | 1.6 | 3.2 | 0.81 | 2.0 | 3.10 | 11.7 |
| D4 | LiNi_{0.6}Co_{0.1}Al_{0.3}O₂ | 2.6 | 1.44 | 1.8 | 18 | 7 | 1.8 | 3.1 | 0.85 | 1.5 | 3.08 | 11.2 |

**Table 2: Electrochemical Performance Results of Cathode materials**

| Sample | Discharge Capacity (mAh·g⁻¹) | 50-cycle capacity retention rate (%) |
|---|---|---|
| Embodiment 1 | 203.7 | 95.4 |
| Embodiment 2 | 203.1 | 95.1 |
| Embodiment 3 | 205.6 | 94.9 |
| Embodiment 4 | 203.1 | 95.4 |
| Embodiment 5 | 210.1 | 96.2 |
| Embodiment 6 | 223.2 | 90.3 |
| Embodiment 7 | 202.8 | 94.7 |
| Embodiment 8 | 203.1 | 95.1 |
| Embodiment 9 | 195.7 | 94.0 |
| Embodiment 10 | 202.5 | 95.1 |
| Embodiment 11 | 203.8 | 95.6 |
| Embodiment 12 | 203.1 | 94.4 |
| Embodiment 13 | 192.7 | 91.8 |
| Comparative Embodiment 1 | 199.5 | 94.2 |
| Comparative Embodiment 2 | 201.5 | 93.8 |
| Comparative Embodiment 3 | 200.9 | 92.3 |
| Comparative Embodiment 4 | 190.2 | 89.8 |

According to the test data of Embodiments 1 to 13, it can be seen that by controlling the average aspect ratio of the cathode material particles to satisfy 1 ≤ α ≤ 1.6 and controlling the proportion of particles with a particle size less than 1 µm to satisfy 10 ≤ R ≤ 16, the particles with a particle size less than 1 µm can effectively fill the gaps between particles larger than 1 µm. This ensures the compaction density and capacity of the cathode material while controlling the particle aspect ratio. An average aspect ratio of the cathode material satisfying 1 ≤ α ≤ 1.6 can reduce particle rupture of the cathode material and improve its structural stability and long-term cycling performance. Under the synergistic effect of the both factors, the cathode material has high capacity and energy density, and excellent long-term cycling stability, particularly high-temperature cycling stability.

According to the test data of Embodiment 1 and Embodiment 2 to 6, it can be seen that as the nickel content in the cathode material increases, the capacity of the cathode material gradually improves. Controlling the one-pulse sintering temperature appropriately helps to enhance the roundness of the cathode material particles, so that the aspect ratio of the particles can be controlled within the range of 1 to 1.6, and the cycling performance of the cathode material is also more stable. In the cathode material of Embodiment 6, the nickel content is the highest, leading to increased lattice distortion and a decrease in the structural stability of the cathode material. Therefore, the cycle capacity retention of the cathode material is somewhat reduced.

According to the test data of Embodiment 1 and Embodiment 7, it can be seen that as the pre-oxidation sintering temperature and time increase, lithium ions can be fully intercalated into the pre-oxidized composite to form a stable lithium nickel cobalt manganese oxide compound. After sufficient lithium intercalation, during the one-pulse sintering process, the adhesion of some particles caused by the lithium salt acting as a flux can be effectively avoided. This results in a more rounded and dispersed particle morphology of the sintered matrix material, and the cathode material exhibits excellent cycling performance and capacity performance.

According to the test data of Embodiment 1 and Embodiment 8, it can be seen that due to the shortened pre-oxidation sintering time, part of the lithium salt can act as a flux, leading to increased particle adhesion. As a result, the aspect ratio of the particles increases, the roundness of the particles decreases, and some particles are prone to cracking during the calendering process of the electrode sheet. This leads to an increase in side reactions between the cathode material and the electrolyte, and the capacity and cycle retention of the cathode material are reduced compared to Embodiment 1.

According to the test data of Embodiment 1 and Embodiment 9, it can be seen that because the cathode material prepared in Embodiment 9 is a lithium nickel cobalt aluminum oxide compound, the discharge capacity of the cathode material decreases slightly, while the cycle capacity retention of the cathode material can be maintained at a relatively high level.

According to the test data of Embodiment 1 and Embodiment 11, it can be seen that as the number of repetitions of the first and second stages during the one-pulse sintering process increases, the aspect ratio of the cathode material particles further decreases, and the proportion of particles with a particle size less than 1 µm also further decreases. Moreover, due to the increased air pressure and classification frequency of the jet milling of the once-sintered product, the particle size distribution width of the cathode material increases, the compaction density of the cathode material improves, and the specific capacity and cycle retention of the cathode material also improve.

According to the test data of Embodiment 1 and Embodiment 12, it can be seen that due to the decrease in the amount of oxygen supplement added, the proportion of particles satisfying 1 ≤ α ≤ 1.6 relative to the total number of particles decreases, and the number of elongated particles in the cathode material increases. As a result, the specific capacity and cycle retention of the cathode material decrease slightly.

According to the test data of Embodiment 1 and Comparative Embodiment 1, it can be seen that due to the absence of a pulse sintering process and the use of a higher sintering temperature, the number of small particles decreases, and the high-temperature sintering tends to cause excessive particle growth, leading to a further increase in the aspect ratio. The proportion of particles with a particle size less than 1 µm decreases, resulting in more voids between particles after the cathode material is coated onto the electrode sheet, a lower compaction density, and consequently a lower capacity. At the same time, the extensive contact with the electrolyte increases the number of side reactions on the material surface, further degrading the cycling performance of the battery.

According to the test data of Embodiment 1 and Comparative Embodiment 2, it can be seen that due to the absence of a pulse sintering process, a lower sintering temperature, and no addition of an oxygen supplement, the growth of the cathode material particles is insufficient, the reaction is incomplete, the aspect ratio of the particles increases, and the particle roundness decreases. Moreover, the proportion of particles with a particle size less than 1 µm increases, resulting in a larger specific surface area of the cathode material, an increase in residual alkali on the surface, and more side reactions with the electrolyte. Consequently, the cycling performance and discharge capacity of the cathode material are reduced.

According to the test data of Embodiment 1 and Comparative Embodiment 3, it can be seen that due to the absence of a pulse sintering process, a lower sintering temperature, and no addition of an oxygen supplement, the growth of the cathode material particles is insufficient, the reaction is incomplete, the aspect ratio of the particles increases, and the particle roundness decreases. Moreover, the proportion of particles with a particle size less than 1 µm increases, resulting in a larger specific surface area of the cathode material, an increase in residual alkali on the surface, and more side reactions with the electrolyte. Consequently, the cycling performance and discharge capacity of the cathode material are reduced.

FIG. 4 is a comparison diagram of cycle performance of the cathode material according to Embodiment 1, Comparative Embodiment 1 and Comparative Embodiment 2 of the present disclosure. As shown in FIG. 4, the capacity retention rate of the cathode material of Embodiment 1 after 50 cycles of 1C rate charge-discharge cycle is better than that of the cathode materials prepared in Comparative Embodiment 1 and Comparative Embodiment 2.

The above description merely illustrates some preferred embodiments of the present disclosure and is not intended to limit the present disclosure, and any modification, equivalent substitution, improvement and the like made within a spirit and a principle of the present disclosure shall fall within a scope of the present disclosure.

## Claims

1. A cathode material, comprising particles, wherein
SEM images of the cathode material are obtained using a scanning electron microscope at a magnification of 3000 x; 200 particles are randomly chosen in the SEM images and measured; an average size of a longest diameter of a single particle of the 200 particles is denoted as D, and an average size of a width diameter that is perpendicular to a longest diameter and passes through a midpoint of the longest diameter is denoted as L; an average aspect ratio of the particles is α = D/L, where 1 ≤ α ≤ 1.6;
in the SEM images of the cathode material, a proportion of particles with a particle size less than 1 µm in the cathode material is R%, where 10 ≤ R ≤ 16.

2. The cathode material according to claim 1, wherein the cathode material has a formula of LiₓNiₐCo_{b}N_{c}M_{d}O₂, where 0.98 ≤ x ≤ 1.1, 0.5 ≤ a ≤ 0.98, 0 < b ≤ 0.40, 0 < c ≤ 0.4, 0 ≤ d ≤ 0.10, a + b + c + d = 1, N is Mn or Al, and M comprises at least one of Ti, Zr, Mg, Sr, Ba, Ca, Nb, W, Sb, Ta, Sn, and Y.

3. The cathode material according to claim 1, wherein in the cathode material, a proportion of particles satisfying 1 ≤ α ≤ 1.6 in all particles is β, where β ≥ 90%.

4. The cathode material according to claim 1, wherein a volume median particle size D₅₀ of the cathode material is 2.0 µm to 6.0 µm.

5. The cathode material according to claim 1, wherein a volume particle size distribution width of the cathode material satisfies: 1 < (D₉₀ - D₁₀)/D₅₀ ≤ 2.

6. The cathode material according to claim 1, wherein the cathode material satisfies at least one of:
(1) the cathode material is a single-crystal material;
(2) the particles comprise primary particles having a particle size of 1 µm to 5 µm.

7. The cathode material according to claim 1, wherein the cathode material has a specific surface area of 0.4 m²/g to 0.8 m²/g.

8. The cathode material according to claim 1, wherein a tap density of the cathode material is ρ1 g/cm³, where 1.5 ≤ ρ1 < 2.2.

9. The cathode material according to claim 1, wherein a compaction density of the cathode material is ρ2 g/cm³, where 3.0 ≤ ρ2 < 3.5.

10. The cathode material according to claim 1, wherein the cathode material has a pH of 11 to 12.

11. The cathode material according to claim 1, wherein an average aspect ratio α of the cathode material satisfies any one of:
(1) the average aspect ratio α of the cathode material is 1, 1.1, 1.15, 1.2, 1.25, 1.3, 1.35, 1.4, 1.45, 1.5, 1.55, 1.6, or within a range formed by any two of above values;
(2) $1.08 \leq α \leq 1.37 ;$
(3) $1.1 \leq α \leq 1.4 ;$
(4) $1.2 \leq α \leq 1.6 .$

12. The cathode material according to claim 1, wherein a number proportion R% of particles with a particle size less than 1 µm in the cathode material satisfies any one of the following conditions:
(1) the number proportion R% of particles with a particle size less than 1 µm in the cathode material is 10, 11, 12, 13, 14, 15, 16 or a range formed by any two of the above values;
(2) $10 \leq R \leq 14 ;$
(3) $11 \leq R \leq 14 .$

13. The cathode material according to claim 1, wherein the cathode material satisfies at least one of the following conditions:
(1) $1 μm < D < 5 μm ;$
(2) $1 μm < L < 5 μm .$

14. A cathode sheet, comprising the cathode material according to any one of claims 1-13.

15. A battery, comprising the cathode material according to any one of claims 1-13 or the cathode sheet according to claim 14.
